# FASCICULE DE BREVET EUROPEEN

(11) **EP 3 030 433 B1**
(45) Date de publication et mention de la délivrance du brevet: **10.04.2019**
(21) Numéro de dépôt: 14748183.2
(22) Date de dépôt: 01.08.2014
(51) Int. Cl.: B60C 13/00

(54) **PNEUMATIQUE COMPORTANT SUR UN FLANC UNE TEXTURE PARTICULIERE**
REIFEN MIT EINEM BESONDEREN PROFIL AUF EINER SEITENWAND
TYRE HAVING A PARTICULAR TEXTURE ON A SIDEWALL

(30) Priorité: 07.08.2013 FR 1357851
(43) Date de publication de la demande: 15.06.2016
(73) Titulaire: Compagnie Générale des Etablissements Michelin, 63000 Clermont-Ferrand (FR)
(72) Inventeur: NOMURA, Masayoshi, Tokyo 163-1073 (JP); DEBORDEAUX, Héloïse, F-63040 Clermont-Ferrand Cedex 9 (FR); FRAPPART, Arnaud, F-63040 Clermont-Ferrand Cedex 9 (FR); MUHLHOFF, Olivier, F-63040 Clermont-Ferrand Cedex 9 (FR)
(74) Mandataire: Demaure, Pierre-Yves
(86) Numéro de dépôt international: PCT/EP2014/066645
(87) Numéro de publication internationale: WO 2015/018763

(56) Documents cités:
- EP-A1- 1 323 550
- EP-A1- 2 305 491
- WO-A1-2007/045425
- DE-A1-102011 051 933
- US-A- 4 343 342

## Description

### DOMAINE DE L'INVENTION

La présente invention concerne un pneumatique pour véhicule automobile comportant une texture particulière sur un flanc.

### ETAT DE LA TECHNIQUE

Il est connu d'habiller les flancs de pneumatiques avec des textures spécifiques. Le document US2003/0230370 divulgue ainsi une texture sur un flanc de pneumatique comportant une pluralité de nervures. Ces nervures, régulièrement espacées, permettent d'améliorer globalement la visibilité du flanc du pneumatique.

Les documents EP 2305491, DE 102011051933 et WO 2007045425 divulguent également des textures sur un flanc de pneumatique.

Au cours de la fabrication du pneumatique, les flancs de ce pneumatique sont moulés et vulcanisés dans un moule. Durant cette opération, les nervures de ces flancs sont moulées par une partie du moule qui, dans sa forme, est le négatif des nervures. Ainsi, dans le cas où les nervures sont en protubérances par rapport au flanc du pneumatique, la partie de moule comprend des creux pour le moulage des nervures. Or au cours du moulage du flanc, ces creux peuvent stocker de l'air emprisonné entre d'une part le moule et d'autre part des surfaces supérieures des nervures. La présence de cet air crée, lors du moulage, des aspérités dans les surfaces supérieures des nervures. Il a été observé que dans le cas de nervures, ces défauts d'aspérité s'organisent globalement au centre des nervures, selon une direction circonférentielle commune, ce qui rend ces aspérités beaucoup plus visibles vis-à-vis d'un tiers observant le pneumatique, lorsque celui-ci monté sur un véhicule.

Il existe donc un besoin de proposer une texture sur le flanc d'un pneumatique facile à fabriquer et donnant au pneumatique un aspect agréable à regarder.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « texture » sur un flanc, on entend un état de surface organisé sur ce flanc.

Par « marquage » sur un flanc d'un pneumatique, on entend des indications sur ce flanc destinées à donner des informations techniques et légales ou à permettre aux consommateurs de distinguer l'origine du produit.

Par « élément graphique », on entend un élément visuel formant une unité de sens.

Par « zone de largeur maximale du flanc », on entend l'ensemble des points de ce flanc qui sont le plus axialement extérieur. Dit autrement, chaque point de cette zone de largeur maximale est selon une vue en coupe méridienne, à la plus grande distance d'un plan équatorial, distance mesurée selon une direction axiale, le pneumatique étant monté et gonflé sur une jante recommandée par l'ETRTO.

### RESUME DE L'INVENTION

L'invention concerne un pneumatique en matériau caoutchoutique selon la revendication 1. Ledit pneumatique comprend un flanc et une texture s'étendant sur tout ou partie de ce flanc. La texture comprend un élément graphique régulièrement répété dans cette texture. Chaque élément graphique est inscriptible dans un cercle de diamètre inférieur ou égal à 20 mm et chaque élément graphique fait protubérance à partir du flanc du pneumatique. Le pneumatique comprenant une zone épaule et une zone de largeur maximale du flanc, la texture est présente entre cette zone épaule et cette zone de largeur maximale du flanc.

Au cours du moulage du flanc du pneumatique, les défauts de fabrication se concentrent au niveau des éléments graphiques de la texture et pas sur la surface lisse du flanc. Du fait de la répétition régulière des éléments graphiques et de leur taille sur le flanc, ces défauts de fabrication « se perdent » dans l'ensemble de la texture, rendant alors leur détection beaucoup plus difficile pour un observateur. Les inventeurs ont en outre observés que les défauts de fabrication sont davantage visibles pour un observateur, entre la zone épaule et la zone de largeur maximale du flanc. En disposant la texture uniquement entre cette zone épaule et cette zone de largeur maximale, on masque alors les défauts dans la partie du flanc la plus utile, c'est-à-dire dans la partie du flanc potentiellement la plus observée. L'aire de la texture étant ainsi limitée sur le flanc, on optimise en conséquence les coûts, notamment les temps de fabrication des parties de moule destinées à mouler la texture.

Selon l'invention, l'élément graphique est sélectionné parmi un groupe d'éléments graphiques comprenant au moins : des lettres, des nombres, des symboles.

On donne ainsi un aspect esthétique à la texture du flanc, ce qui masque davantage les éventuels défauts sur le flanc au niveau des éléments graphiques.

Dans une variante de réalisation, l'élément graphique est complexe. Par élément graphique complexe, on entend que cet élément graphique comprend au moins deux parties, ces deux parties formant entre elles un angle supérieur à 0° et inférieur à 180°.

L'air présent dans le moule au cours du moulage du flanc crée des aspérités qui sont aléatoirement répartis sur une surface supérieure de l'élément graphique. En formant des éléments graphiques complexes dans la texture, on améliore encore davantage la répartition aléatoire des aspérités dans la texture.

Dans une autre variante de réalisation, l'élément graphique est la lettre M.

Les inventeurs ont observé que l'utilisation de la lettre complexe M rendait, de par la forme particulière de cette lettre, les défauts de moulage dans la texture beaucoup moins visibles.

Dans une autre variante de réalisation, vue en coupe, la section de l'élément graphique est globalement courbe.

On améliore ainsi le masquage des défauts de moulage de l'élément graphique tout en rendant globalement plus robuste la texture.

Dans une autre variante de réalisation, l'élément graphique présente au moins une zone de réduction en largeur.

Les inventeurs ont observé que la zone de réduction en largeur concentre les défauts de moulage sur l'élément graphique. Ainsi en créant une telle zone de réduction en largeur, on peut concentrer les défauts de moulage sur une partie précise de l'élément graphique et améliorer en conséquence le masquage des défauts dans la texture.

Dans une autre variante de réalisation, l'élément graphique présente différentes orientations lorsqu'il est répété dans la texture.

En modifiant l'orientation de l'élément graphique dans la texture, on améliore le caractère aléatoire de la répartition des défauts dans la texture et on rend ces défauts beaucoup moins visibles pour un observateur.

Selon l'invention, le flanc comprend un marquage de hauteur H faisant protubérance à partir de ce flanc. La texture présente une hauteur h comprise entre 20% et 80% de la hauteur H du marquage.

On crée ainsi un contraste entre le marquage et la texture du flanc. Ceci permet d'améliorer globalement la visibilité de ce marquage sur le flanc.

Dans une autre variante de réalisation, au moins deux éléments graphiques adjacents sont reliés entre eux par un pont en matériau caoutchoutique.

On améliore ainsi la rigidité des éléments graphiques dans la texture et on augmente en conséquence la pérennité de cette texture.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'un flanc d'un pneumatique et une texture présente sur ce flanc ;
- la **figure 2** représente un agrandissement de la texture de la **figure 1** ;
- la **figure 3** représente une vue en coupe de la texture selon l'axe A-A' de la **figure 2** ;
- la **figure 4** représente un élément graphique de la texture de la **figure 1****,** selon une seconde variante de réalisation ;
- la **figure 5** représente la texture de la **figure 1****,** selon une troisième variante de réalisation ;
- la **figure 6** représente une vue en coupe de la texture de la **figure 1****,** cette texture bordant un marquage ;
- la **figure 7** représente des éléments graphiques de la texture de la **figure 1****,** selon une quatrième variante de réalisation.

Dans la description qui va suivre, des éléments sensiblement identiques ou similaires seront désignés par des références identiques.

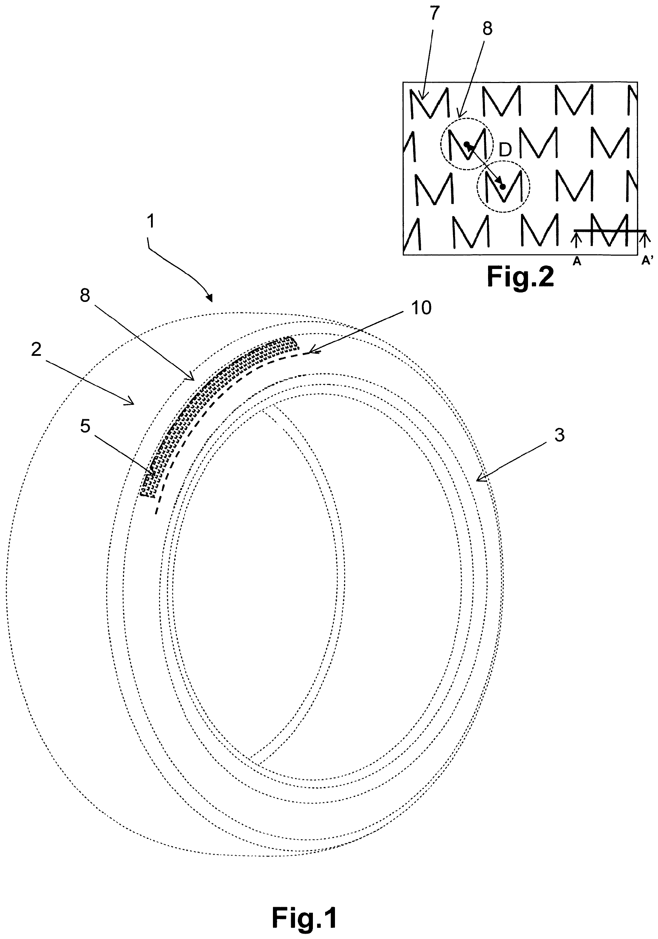

La **figure 1** représente une vue en perspective d'un pneumatique 1. Ce pneumatique 1 comprend une bande de roulement 2 et un flanc 3 bordant cette bande de roulement. Plus particulièrement, le flanc 3 comporte une texture 5 qui est ici représentée sur une partie seulement du flanc 3. Plus particulièrement, la texture 5 est présente entre une zone épaule 8 et une zone de largeur maximale 10 du flanc (zone représentée partiellement en pointillé).

La **figure 2** est un agrandissement de la texture 5. Cette texture 5 comprend une pluralité d'éléments graphiques 7 faisant protubérance et régulièrement disposés dans la texture. Chaque élément graphique provient ici d'un élément graphique de base commun. Cet élément graphique de base est sélectionné parmi un groupe d'éléments graphiques comprenant au moins des lettres, des nombres, des symboles. Dans l'exemple de la **figure 2****,** l'élément graphique est un élément graphique complexe correspondant à la lettre M. Par élément graphique complexe, on entend un élément graphique comportant plusieurs parties 12, 14. Ces parties 12, 14 forment entre elles un angle β supérieur à 0° et inférieur à 180°.

Les éléments graphiques 7 ont une taille limitée et chacun de ces éléments est ici inscriptible dans un cercle 8 de diamètre inférieur ou égal à 20 mm. De la même manière, les éléments graphiques 7 ont une taille minimale et les cercles dans lesquels ces éléments graphiques sont inscriptibles ont un diamètre supérieur ou égal à 1 mm. Dans l'exemple de la **figure 2****,** on notera que la distance D entre les centres de deux cercles 8 adjacents est inférieure ou égale à 40 mm, ce qui permet une bonne densité d'éléments graphiques dans la texture 5.

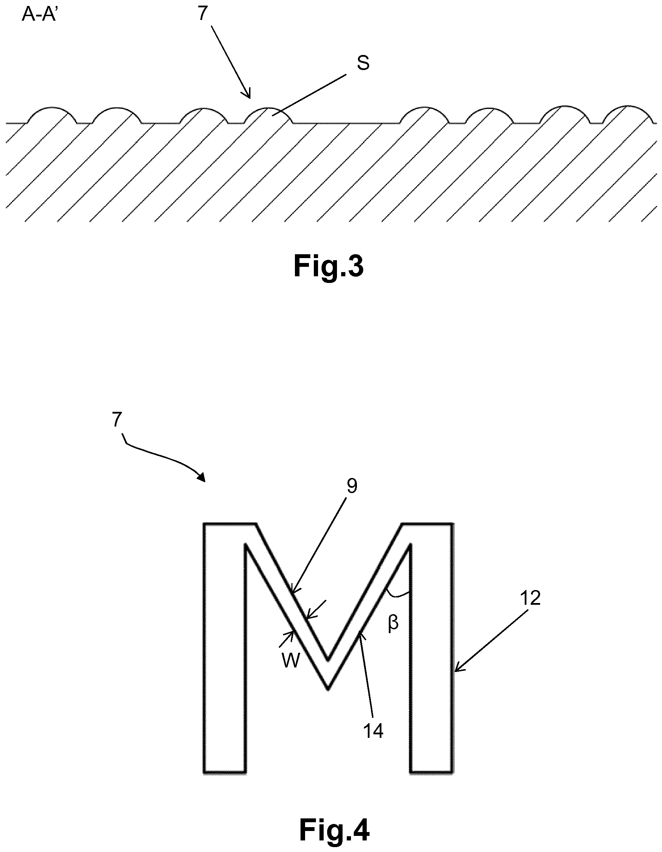

La **figure 3** représente une vue en coupe de la texture 3 selon un axe A-A' de la **figure 2****.** Dans cette vue, l'élément graphique 7 a une section S globalement courbe.

La **figure 4** représente un élément graphique 7 selon une seconde variante de réalisation, dans laquelle cet élément graphique 7 comprend une zone 9 de réduction en largeur W.

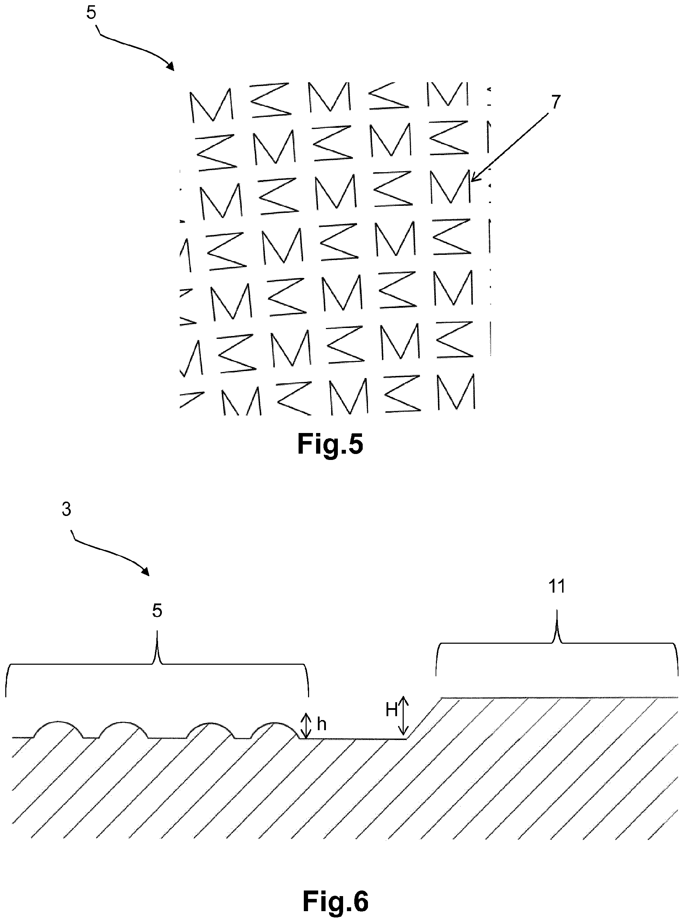

La **figure 5** représente une texture 5 selon une troisième variante de réalisation. Dans cette variante, l'élément graphique de base est répété dans la texture 5 selon différentes orientations. Dans l'exemple de la **figure 5****,** l'élément graphique de base est, pour certains éléments 7, répété avec une rotation de 90°.

La **figure 6** représente une vue en coupe de la texture 5 bordant un marquage 11. La hauteur h de la texture 5 est ici comprise entre 20% et 80% de la hauteur H du marquage 11.

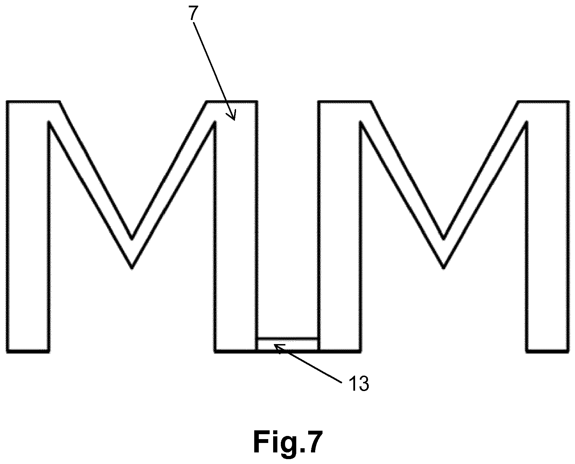

La **figure 7** représente des éléments graphiques 7 selon une quatrième variante de réalisation. Dans cette variante, les éléments graphiques 7 sont reliés entre eux par un pont 13 en matériau caoutchoutique.

L'invention n'est pas limitée aux exemples décrits et représentés et diverses modifications peuvent y être apportées sans sortir de son cadre, tel que défini par les revendications.

Ainsi dans une variante de réalisation, les éléments graphiques peuvent avoir des hauteurs différentes.

Dans une autre variante de réalisation, la texture comprend des éléments graphiques provenant de différents éléments graphiques de base.

## Revendications

1. Pneumatique en matériau caoutchoutique comprenant un flanc (3) et une texture (5) s'étendant sur tout ou partie de ce flanc **caractérisé en ce que** la texture comprend un élément graphique (7) régulièrement répété dans cette texture, ledit élément graphique étant un élément visuel formant une unité de sens, chaque élément graphique (7) étant inscriptible dans un cercle de diamètre inférieur ou égal à 20 mm, chaque élément graphique (7) faisant protubérance à partir du flanc du pneumatique et **en ce que** le pneumatique comprenant une zone épaule (8) et une zone de largeur maximale (10) du flanc, la texture (5) est présente uniquement entre cette zone épaule (8) et cette zone de largeur maximale (10) du flanc et **en ce que** la distance D entre les centres de deux cercles adjacents est inférieure ou égale à 40 mm et **en ce que** le flanc (3) comprend un marquage (11) de hauteur H faisant protubérance à partir de ce flanc et **en ce que** la texture (5) a une hauteur (h) comprise entre 20% et 80% de la hauteur H du marquage (11) et **en ce que** l'élément graphique (7) est sélectionné parmi un groupe d'éléments graphiques comprenant au moins :
- des lettres ;
- des nombres ;
- des symboles.

2. Pneumatique selon la revendication 1, **caractérisé en ce que** l'élément graphique (7) est complexe, ledit élément graphique complexe comprenant au moins deux parties, lesdites parties formant entre elles un angle supérieur à 0° et inférieur à 180°.

3. Pneumatique selon l'une quelconque des revendications 1 ou 2, **caractérisé en ce que** l'élément graphique (7) est la lettre M.

4. Pneumatique selon l'une quelconque des revendications 1 à 3, **caractérisé en ce que** l'élément graphique comprend au moins une zone de réduction en largeur W.

5. Pneumatique selon l'une quelconque des revendications 1 à 4, **caractérisé en ce que** l'élément graphique (7) présente différentes orientations lorsqu'il est répété dans la texture (5).

6. Pneumatique selon l'une quelconque des revendications 1 à 5, **caractérisé en ce qu'**au moins deux éléments graphiques adjacents sont reliés entre eux par un pont en matériau caoutchoutique.

## Patentansprüche

1. Reifen aus Kautschukmaterial, welcher eine Seitenwand (3) und eine Struktur (5), die sich auf dieser gesamten Seitenwand oder einem Teil davon erstreckt, umfasst, **dadurch gekennzeichnet, dass** die Struktur ein graphisches Element (7) umfasst, das sich in dieser Struktur regelmäßig wiederholt, wobei das graphische Element ein visuelles Element ist, das eine Sinneinheit bildet, wobei jedes graphische Element (7) in einen Kreis mit einem Durchmesser einbeschreibbar ist, der kleiner oder gleich 20 mm ist, wobei jedes graphische Element (7) von der Seitenwand des Reifens aus vorsteht, und dadurch, dass der Reifen einen Schulterbereich (8) und einen Bereich maximaler Breite (10) der Seitenwand umfasst, wobei die Struktur (5) ausschließlich zwischen diesem Schulterbereich (8) und diesem Bereich maximaler Breite (10) der Seitenwand vorhanden ist, und dadurch, dass der Abstand D zwischen den Mittelpunkten zweier benachbarter Kreise kleiner oder gleich 40 mm ist, und dadurch, dass die Seitenwand (3) eine Markierung (11) der Höhe H, die von dieser Seitenwand aus vorsteht, umfasst, und dadurch, dass die Struktur (5) eine Höhe (h) aufweist, die zwischen 20 % und 80 % der Höhe H der Markierung (11) beträgt, und dadurch, dass das graphische Element (7) aus einer Gruppe graphischer Elemente ausgewählt ist, welche wenigstens umfasst:
- Buchstaben;
- Zahlen;
- Symbole.

2. Reifen nach Anspruch 1, **dadurch gekennzeichnet, dass** das graphische Element (7) komplex ist, wobei das komplexe graphische Element wenigstens zwei Teile umfasst, wobei diese Teile einen Winkel miteinander bilden, der größer als 0° und kleiner als 180° ist.

3. Reifen nach einem der Ansprüche 1 oder 2, **dadurch gekennzeichnet, dass** das graphische Element (7) der Buchstabe "M" ist.

4. Reifen nach einem der Ansprüche 1 bis 3, **dadurch gekennzeichnet, dass** das graphische Element wenigstens einen Bereich verringerter Breite W umfasst.

5. Reifen nach einem der Ansprüche 1 bis 4, **dadurch gekennzeichnet, dass** das graphische Element (7) unterschiedliche Ausrichtungen aufweist, wenn es in der Struktur (5) wiederholt wird.

6. Reifen nach einem der Ansprüche 1 bis 5, **dadurch gekennzeichnet, dass** wenigstens zwei benachbarte graphische Elemente durch eine Brücke aus Kautschukmaterial miteinander verbunden sind.

## Claims

1. Tyre made of rubbery material comprising a sidewall (3) and a texture (5) extending over all or part of this sidewall, **characterized in that** the texture comprises a graphic element (7) that is regularly repeated in this texture, each graphic element (7) being able to be inscribed inside a circle of a diameter less than or equal to 20 mm, each graphic element (7) projecting from the sidewall of the tyre, and **in that,** with the tyre comprising a shoulder zone (8) and a zone of maximum width (10) of the sidewall, the texture (5) is present exclusively between this shoulder zone (8) and this zone of maximum width (10) of the sidewall and **in that** the distance D between the centers of two adjacent circles is less than or equal to 40 mm and **in that** the sidewall (3) comprises a marking (11) of height H projecting from this sidewall, and **in that** the texture (5) has a height (h) of between 20% and 80% of the height H of the marking (11) and **in that** the graphic element (7) is selected from a group of graphic elements comprising at least:
- letters;
- numbers;
- symbols.

2. Tyre according to Claim 1, **characterized in that** the graphic element (7) is complex, this graphic element comprises at least two parts, these two parts between them making an angle greater than 0° and less than 180°.

3. Tyre according to any one of Claims 1 and 2, **characterized in that** the graphic element (7) is the letter M.

4. Tyre according to any one of Claims 1 to 3, **characterized in that** the graphic element comprises at least one zone of reduced width W.

5. Tyre according to any one of Claims 1 to 4, **characterized in that** the graphic element (7) has different orientations when repeated in the texture (5).

6. Tyre according to any one of Claims 1 to 5, **characterized in that** at least two adjacent graphic elements are joined together by a bridge of rubbery material.
